# EUROPÄISCHE PATENTANMELDUNG

(11) **EP 1 253 408 A1**
(43) Veröffentlichungstag der Anmeldung: **30.10.2002**
(21) Anmeldenummer: 01109977.7
(22) Anmeldetag: 24.04.2001
(51) Int. Cl.: G01F 1/84

(54) **Messwandler vom Vibrationstyp**

(71) Anmelder: Endress + Hauser Flowtec AG, CH-4153 Reinach BL 1 (CH)
(72) Erfinder: Rieder, Alfred, Dr, 84034 Landshut (DE); Drahm, Wolfgang, Dr., 85435 Erding (DE)

(57) **Zusammenfassung**

Zum Führen eines Fluids weist der Meßwandler ein, angetrieben von einer Erregeranordnung (40), im Betrieb vibrierendes Meßrohr (10) auf, von dem einlaßseitige und auslaßseitige Schwingungen mittels einer Sensoranordnung (50) erfaßt werden. Aufgrund von im vibrierenden Meßrohr (10) erzeugten Querkräften wird dieses zumindest zeitweise aus einer zugewiesenen statischen Ruhelage lateral verschoben. Zur Verbesserung der dynamischen Balance des Meßwandlers sind an einem in das Meßrohr (10) einmündenden Einlaßrohrstück (11) ein Ausleger (15) und an einem in das Meßrohr (10) einmündenden Auslaßrohrstück (12) ein Ausleger (16) starr fixiert. Mittels der Ausleger (15, 16) werden aufgrund lateraler Verschiebungen des Meßrohrs (10) Ein - und Auslaßrohrstück (11, 12) verformt. Dadurch werden solche Gegenkräfte erzeugt, die die im vibrierenden Meßrohr (10) erzeugten Querkräfte zumindest teilweise kompensieren. Der vorgeschlagene Meßwandler zeichnet sich u.a. dadurch aus, daß er im Betrieb auch bei schwankender Fluiddichte weitgehend ausbalanciert ist.

## Beschreibung

Die Erfindung betrifft einen, insb. für eine Verwendung in einem Coriolis-Massedurchflußmesser geeigneten, Meßwandler vom Vibrationstyp.

Zur Ermittlung eines Massedurchflusses eines in einer Rohrleitung strömenden Fluids, insb. einer Flüssigkeit, werden oftmals solche Meßgeräte verwendet, die mittels eines Meßwandlers vom Vibrationstyp und einer daran angeschlossener Steuer- und Auswerteelektronik, im Fluid Corioliskräfte bewirken und von diesen abgeleitet ein den Massedurchfluß repräsentierendes Meßsignal erzeugen.

Solche Coriolis-Massedurchflußmesser sind seit langem bekannt und im industriellen Einsatz. So sind z.B. in der US-A 53 98 554, der US-A 54 76 013, der US-A 55 31 126, der US-A 56 91 485, US-A 57 05 754, der US-A 57 96 012, der USA 59 79 246, der WO-A 99 51 946 oder der WO-A 00 14 485 Coriolis-Massedurchflußmesser mit jeweils einem Meßwandler vom Vibrationstyp beschrieben, welcher Meßwandler auf einen Massedurchfluß eines in einer Rohrleitung strömenden Fluids reagiert und welcher Meßwandler umfaßt:
- ein einziges gerades, im Betrieb vibrierendes Meßrohr zum Führen des Fluids, welches Meßrohr über ein einlaßseitig einmündendes Einlaßrohrstück und über ein auslaßseitig einmündendes Auslaßrohrstück mit der Rohrleitung kommuniziert, sowie
- eine Erregeranordnung, die das Meßrohr im Betrieb zu Biegeschwingungen in einer Rohrebene anregt
- eine Sensoranordnung zum punktuellen Erfassen einlaßseitiger und auslaßseitiger Schwingungen des Meßrohrs.

Gerade Meßrohre bewirken bekanntlich, zu Biegeschwingungen gemäß einer ersten Eigenschwingungsform angeregt, im hindurchströmenden Fluid Corioliskräfte. Diese wiederum führen dazu, daß den angeregten Biegeschwingungen koplanare Biegeschwingungen gemäß einer zweiten Eigenschwingungsform von höherer und/oder niederer Ordnung überlagert werden und dementsprechend die mittels der Sensoranordnung einlaßseitig und auslaßseitig erfaßten Schwingungen eine auch vom Massedurchfluß abhängige, meßbare Phasendifferenz aufweisen.

Üblicherweise werden die Meßrohre derartiger, z.B. in Coriolis-Massedurchflußmessern eingesetzten, Meßwandler im Betrieb auf einer momentanen Resonanzfrequenz der ersten Eigenschwingungsform, insb. bei konstantgeregelter Schwingungsamplitude, angeregt. Da diese Resonanzfrequenz insb. auch von der momentanen Dichte des Fluids abhängig ist, kann mittels marktüblicher Coriolis-Massedurchflußmesser neben dem Massedurchfluß auch die Dichte von strömenden Fluiden gemessen werden.

Ein Vorteil gerader Meßrohre besteht z.B. darin, daß sie praktisch in jeder beliebigen Einbaulage, insb. auch nach einer in-line durchgeführten Reinigung, mit hoher Sicherheit rückstandslos entleert werden können. Ferner sind solche Meßrohre im Vergleich z.B. zu einem omegaförmig oder helixförmig gebogenem Meßrohr wesentlich einfacher und dementsprechend kostengünstiger herzustellen. Ein weiterer Vorteil eines in der oben beschriebenen Weise vibrierenden, geraden Meßrohrs ist z.B. im Vergleich zu gebogenen Meßrohren auch darin zu sehen, daß im Meßbetrieb via Meßrohr praktisch keine Torsionsschwingungen in der angeschlossenen Rohrleitung hervorgerufen werden.

Demgegenüber besteht ein wesentlicher Nachteil vorbeschriebener Meßwandler darin, daß aufgrund wechselseitiger lateraler Auslenkungen des vibrierenden einzigen Meßrohrs gleichfrequent oszillierende Querkräfte auf die Rohrleitung wirken können und daß diese Querkräfte bisher nur sehr begrenzt und nur mit einem sehr hohen technischen Aufwand kompensiert werden können.

Zur Verbesserung der dynamischen Balance des Meßwandlers, insb. zur Reduzierung solcher durch das vibrierende einzige Meßrohr erzeugten, einlaßseitig und auslaßseitig auf die Rohrleitung einwirkenden Querkräften, umfassen die in der US-A 53 98 554, der US-A 55 31 126, der US-A 56 91 485, der US-A 57 96 012, US-A 59 79 246 oder der WO-A 00 14 485 gezeigten Meßwandler jeweils wenigstens einen einstückigen oder mehrteilig ausgeführten Gegenschwinger, der jeweils einlaßseitig und auslaßseitig am Meßrohr fixiert ist. Derartige balkenförmig, insb. rohrförmig, oder als mit dem Meßrohr fluchtendes Körperpendel realisierte Gegenschwinger schwingen im Betrieb zum jeweiligen Meßrohr außer Phase, insb. gegenphasig, wodurch die Wirkung der durch Meßrohr und Gegenschwinger jeweils hervorgerufenen seitlichen Querkräfte auf die Rohrleitung minimiert und ggf. auch völlig unterdrückt werden können.

Derartige Meßwandler mit Gegenschwinger haben sich insb. bei solchen Anwendungen bewährt, bei denen das zu messende Fluid eine im wesentlich konstante oder nur in einem sehr geringen Maße veränderliche Dichte aufweist, also bei solchen Anwendungen, bei denen eine auf die angeschlossene Rohrleitung wirkende Resultierende aus den vom Meßrohr erzeugten Querkräften und vom Gegenschwinger erzeugten Gegenkräften vorab ohne weiteres auf Null fest eingestellt werden kann.

Demgegenüber weist ein derartiger Meßwandler, insb. gemäß der US-A 55 31 126 oder der US-A 59 69 265, bei Anwendung für Fluiden mit in einem weiten Bereich schwankender Dichte, z.B. verschiedenen, aufeinanderfolgend zu messenden Fluiden, wenn auch in geringerem Maße, praktisch den gleichen Nachteil wie ein Meßwandler ohne Gegenschwinger auf, da vorgenannte Resultierende auch von der Dichte des Fluids abhängig sind und somit in erheblichem Maße von Null verschieden sein können. Anders gesagt, auch ein aus Meßrohr und Gegenschwinger bestehendes Gesamtsystem wird im Betrieb aufgrund von dichteabhängigen Unbalancen und damit einhergehenden Querkräften aus einer zugewiesenen statischen Ruhelage global ausgelenkt.

Eine Möglichkeit zur Reduzierung der dichteabhängigen Querkräfte ist z.B. in der US-A 59 79 246 oder in der WO-A 00 14 485 vorgeschlagen. Bei den dort gezeigten Meßwandlern wird das Problem von dichteabhängigen Unbalancen dadurch gelöst, daß ein Amplitudengang des Gegenschwingers, insb. durch amplitudenabhängig veränderliche Federsteifigkeiten des Gegenschwingers, vorab und/oder im Betrieb derart an die Meßrohrschwingungen angepaßt wird, daß die von Meßrohr und Gegenschwinger erzeugten Kräfte einander kompensieren.

Ein andere Möglichkeit zur Reduzierung von dichteabhängigen Querkräften ist z.B. in der US-A 52 87 754, der US-A 57 05 754 oder der US-A 57 96 010 beschrieben. Bei dort gezeigten Meßwandlern werden die seitens des vibrierenden einzigen Meßrohrs erzeugten, eher mittel- oder hochfrequent oszillierenden Querkräfte mittels eines im Vergleich zum Meßrohr sehr schweren Gegenschwingers und ggf. einer relativ weichen Ankopplung des Meßrohrs an die Rohrleitung, also praktisch mittels eines mechanischen Tiefpasses, von der Rohrleitung, fern gehalten. Ein großer Nachteil eines solchen Meßwandlers besteht u.a. aber darin, daß die zur Erzielung einer ausreichend robusten Dämpfung erforderliche Masse des Gegenschwingers überproportional mit Nennweite des Meßrohrs steigt. Eine Verwendung solch massiger Bauteile bedeutet einerseits stets einen erhöhten Montageaufwand sowohl bei der Fertigung als auch beim Einbau des Meßgeräts in die Rohrleitung. Andererseits ist hierbei stets sicherzustellen, daß eine mit zunehmender Masse immer niedriger werdende minimale Eigenfrequenz des Meßwandlers nach wie vor weitab von den ebenfalls sehr niedrigen Eigenfrequenzen der angeschlossenen Rohrleitung liegt. Somit ist eine Verwendung eines derartigen Meßwandlers in industriell, insb. für Messungen von Flüssigkeiten, einsetzbaren Coriolis-Massedurchflußmessern oder auch Coriolis-Massedurchfluß/Dichtemessern eher auf relativ geringe Nennweiten von kleiner gleich 10 mm begrenzt.

Ein Aufgabe der Erfindung besteht daher darin, einen, insb. für einen Coriolis-Massedurchflußmesser oder auch für einen Coriolis-Massedurchfluß/Dichtemesser geeigneten, Meßwandler anzugeben, der, auch bei einer Verwendung nur eines einzigen, insb. geraden, Meßrohrs, im Betrieb über einen weiten Fluiddichtebereich dynamisch gut ausbalanciert ist und der trotzdem von vergleichsweise geringer Masse ist.

Zur Lösung der Aufgabe besteht die Erfindung in einem Meßwandler vom Vibrationstyp für ein in einer Rohrleitung strömendes Fluid, welcher Meßwandler umfaßt:
- ein im Betrieb vibrierendes Meßrohr zum Führen des Fluids,
   -- wobei das Meßrohr über ein einlaßseitig einmündendes Einlaßrohrstück und über ein auslaßseitig einmündendes Auslaßrohrstück mit der Rohrleitung kommuniziert und
   -- wobei aufgrund von im vibrierenden Meßrohr erzeugten Querkräften dieses zumindest zeitweise aus einer zugewiesenen statischen Ruhelage lateral verschoben ist,
- eine Erregeranordnung zum Antreiben des Meßrohrs,
- eine Sensoranordnung zum Erfassen einlaßseitiger und auslaßseitiger Schwingungen des Meßrohrs,
- einen am Einlaßrohrstück starr fixierten ersten Ausleger zum Erzeugen von dieses elastisch verformenden Biegemomenten und
- einen am Auslaßrohrstück starr fixierten zweiten Ausleger zum Erzeugen von dieses elastisch verformenden Biegemomenten,
- wobei im sich verformenden Einlaßrohrstück und im sich verformenden Auslaßrohrstück Gegenkräfte erzeugt werden, die die im vibrierenden Meßrohr erzeugten Querkräfte zumindest teilweise kompensieren.

Nach einer bevorzugten ersten Ausgestaltung der Erfindung schwingen das sich verformende Einlaßrohrstück und das sich verformende Auslaßrohrstück gegenphasig zum Meßrohr.

Nach einer bevorzugten zweiten Ausgestaltung der Erfindung ist das Meßrohr im wesentlichen gerade.

Nach einer bevorzugten dritten Ausgestaltung der Erfindung führt das vibrierende Meßrohr Biegeschwingungen aus.

Nach einer bevorzugten vierten Ausgestaltung der Erfindung umfaßt der Meßwandler einen einlaßseitig und auslaßseitig am Meßrohr fixierten Gegenschwinger.

Nach einer bevorzugten fünften Ausgestaltung der Erfindung ist der Gegenschwinger rohrförmig.

Nach einer bevorzugten sechsten Ausgestaltung der Erfindung ist das Meßrohr zumindest teilweise vom Gegenschwinger ummantelt.

Nach einer bevorzugten siebenten Ausgestaltung der Erfindung sind Meßrohr und Gegenschwinger zueinander koaxial ausgerichtet.

Nach einer bevorzugten achten Ausgestaltung der Erfindung sind am Gegenschwinger diskrete Massestücke fixiert.

Nach einer bevorzugten neunten Ausgestaltung der Erfindung sind in den Gegenschwinger Nuten eingeformt.

Nach einer bevorzugten zehnten Ausgestaltung der Erfindung sind die Zusatzmassen ringförmig am Gegenschwinger und koaxial zu diesem angeordnet.

Ein Grundgedanke der Erfindung ist es, eher störend auf die Messungen und/oder die angeschlossene Rohrleitung wirkende laterale Bewegungen des vibrierenden Meßrohrs, die dessen primären, die Meßeffekte bewirkenden Verformungen überlagert sind, in den Meßwandler dynamisch ausbalancierende, gegenläufige Verformungen des Ein- und Auslaßrohrstücks umzuwandeln.

Ein Vorteil der Erfindung besteht darin, daß der Meßwandler zum einen trotz allfälliger, betriebsbedingter Schwankungen der inneren Massenverteilung, also auch unabhängig von der Fluiddichte, und zwar lediglich aufgrund seiner mittels Ausleger erzwungenen inneren geometrischen Ausprägung sehr gut ausbalanciert ist, wodurch innere Querkräfte von der angeschlossenen Rohrleitung weitgehend fern gehalten werden können. Zum anderen wirken auch die dazu erforderlichen, inneren Verformungskräfte nicht über den Meßwandler hinaus, insb. ebenfalls nicht auf die Rohrleitung.

Der erfindungsgemäße Meßwandler zeichnet sich des weiteren dadurch aus, daß er aufgrund der dynamischen Schwingungsentkopplung zum einen sehr kompakt und zum anderen sehr leicht ausgeführt werden kann. Es hat sich hierbei gezeigt, daß ein derartiger Meßwandler z.B. gegenüber einem Meßwandler, dessen innere Querkräfte in vergleichbarer Güte mittels des oben erwähnten mechanischen Tiefpaßsystems kompensiert werden, eine um mehr als 25% niedrigere Masse aufweisen kann.

Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
- Fig. 1: zeigt teilweise geschnitten einen Meßwandler vom Coriolis-Typ mit einem Meßrohr in einer Seitenansicht,
- Fig. 2: zeigt teilweise geschnitten eine Ausgestaltung eines Meßwandlers gemäß Fig. 1,
- Fig. 3: zeigt schematisch Biegelinien des Meßrohrs im Betrieb eines Meßwandlers gemäß Fig. 1 oder 2 und
- Fig. 4: zeigt schematisch einen Auschnitt des Meßrohrs im Betrieb eines Meßwandlers gemäß Fig. 1 oder 2.

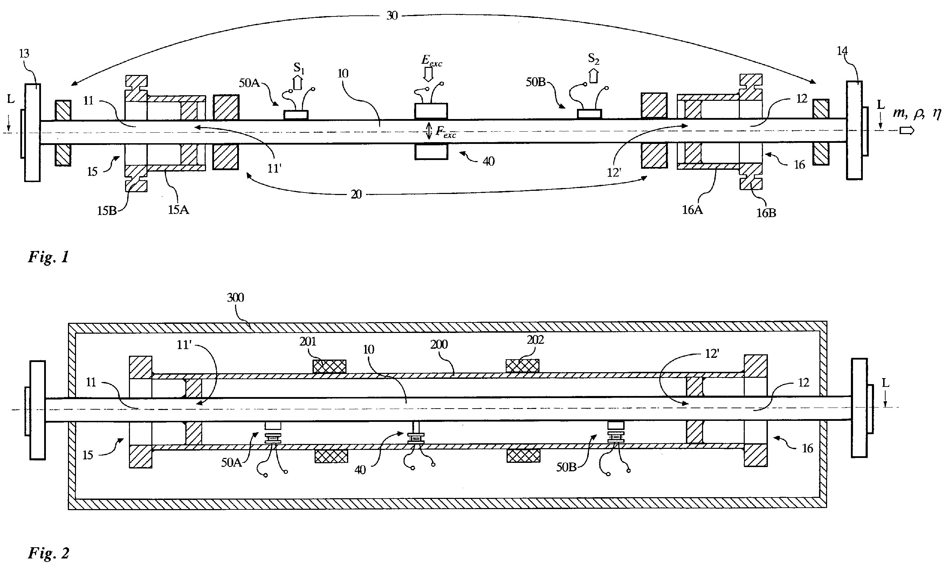

In den Fig. 1 und 2 ist ein Meßwandler vom Vibrationstyp schematisch dargestellt. Der Meßwandler dient dazu, in einem hindurchströmenden Fluid mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so in der dem Fachmann bekannten Weise z.B. ein Massedurchfluß *m*, eine Dichte ρ und/oder eine Viskosität η des Fluids gemessen werden.

Zum Führen des Fluids umfaßt Meßwandler ein, insb. einziges, im wesentlichen gerades Meßrohr 10, das im Betrieb, um eine statische Ruhelage oszillierend, praktisch permanent elastisch verformt wird.

Dazu ist das Meßrohr 10 in einem einlaßseitig und auslaßseitig an diesem in geeigneter Weise fixierten ersten Tragsystem 20 schwingfähig gelagert. Als Tragsystem 20 können z.B., wie auch in der WO-A 99 51 946 gezeigt, am Meßrohr 10 fixierte, hinreichend träge Massen dienen. Weitere bevorzugte Ausgestaltungen des Tragsystems 20 werden weiter unten noch näher erläutert.

Zum Hindurchströmenlassen des Fluids ist das Meßrohr 10 über ein einlaßseitig einmündendes Einlaßrohrstück 11 und über ein auslaßseitig einmündendes Auslaßrohrstück 12 an eine das Fluid zu- bzw. abführende, hier nicht dargestellte, Rohrleitung angeschlossen. Meßrohr 10, Einlaß- und Auslaßrohrstück 11, 12 sind, zueinander und zu einer imaginären Längsachse L fluchtend ausgerichtet, in vorteilhafter Weise einstückig ausgeführt, so daß zu deren Herstellung z.B. ein einziges rohrförmiges Halbzeug dienen kann; falls erforderlich können Meßrohr 10 und Rohrstücke 11, 12 aber auch mittels einzelner, nachträglich zusammengefügter, z.B. zusammengeschweißter, Halbzeuge hergestellt werden. Zur Herstellung des Meßrohrs 10 kann hierbei praktisch jedes der für solche Meßwandler üblichen Materialien, wie z.B. Stahl, Titan, Zirkonium etc., verwendet werden.

Für den Fall, daß der Meßwandler lösbaren mit der Rohrleitung zu montieren ist, ist dem Einlaßrohrstück 11 und dem Auslaßrohrstück 12 bevorzugt jeweils ein erster bzw. zweiter Flansch 13, 14 angeformt; falls erforderlich können Ein- und Auslaßrohrstück 11, 12 aber auch direkt mit der Rohrleitung, z.B. mittels Schweißen oder Hartlötung, verbunden werden.

Ferner kann, wie in den Fig. 1 schematisch dargestellt, am Ein- und am Auslaßrohrstück 11, 12, ein, zweites Tragsystem 30 fixiert sein, das, bevorzugt auch als das Meßrohr 10 aufnehmendes Wandlergehäuse 300 ausgestaltet sein kann, vgl. Fig. 2.

Im Betrieb des Meßwandlers wird das Meßrohr 10 zu Biegeschwingungen, insb. im Bereich einer natürlichen Resonanzfrequenz, so angeregt, daß es sich in diesem sogenannten Nutzmode im wesentlichen gemäß einer natürlichen ersten Eigenschwingungsform ausbiegt.

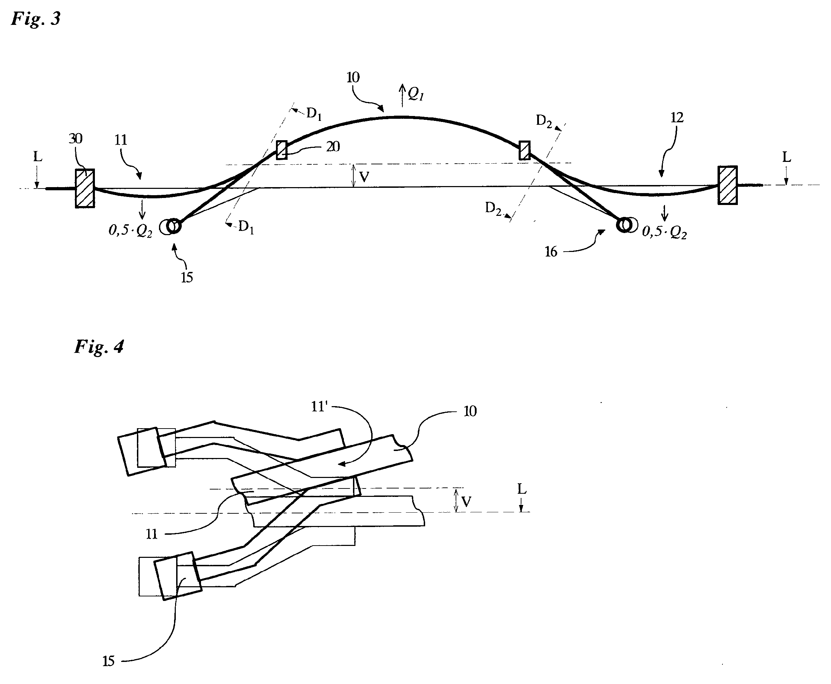

Nach einer bevorzugten Ausgestaltung der Erfindung, wird das Meßrohr 10 dazu im Betrieb 10 mit einer Schwingungsfrequenz angeregt, die möglichst genau einer natürlichen Resonanzfrequenz des sogenannten *f1-*Eigenmodes des Meßrohrs 10 entspricht, also einem symmetrischen Eigenmode bei dem, wie in Fig. 3 schematisch dargestellt, das vibrierende, jedoch nicht vom Fluid durchströmte Meßrohr 10 einen einzigen Schwingungsbauch aufweist. Beispielsweise liegt die Resonanzfrequenz des *f1*-Eigenmodes bei einem als Meßrohr 10 dienenden Edelstahlrohr mit einer Nennweite von 20 mm, einer Wandstärke von etwa 1,2 mm und einer Länge von etwa 350 mm, in etwa bei 850 Hz bis 900 Hz.

Für den Fall, daß das Fluid in der Rohrleitung strömt und somit der Massedurchfluß m von Null verschieden ist, werden mittels des in oben beschriebener Weise vibrierenden Meßrohr 10 im hindurchströmenden Fluid Corioliskräfte induziert. Diese wiederum wirken auf das Meßrohr 10 zurück und bewirken so eine zusätzliche, sensorisch erfaßbare, hier jedoch nicht dargestellte, Verformung des Meßrohrs 10 gemäß einer natürlichen zweiten Eigenschwingungsform, die dem angeregten Nutzmode koplanar überlagert ist. Die momentane Ausprägung der Verformung des Meßrohrs 10 ist dabei, insb. hinsichtlich ihrer Amplituden, auch vom momentanen Massedurchfluß m abhängig. Als zweite Eigenschwingungsform, dem sogenannten Coriolismode, kann, wie bei derartigen Meßwandlern üblich, z.B. die Eigenschwingungsform des anti-symmetrischen *f2*-Eigenmodes, also jene mit zwei Schwingungsbäuchen und/oder die Eigenschwingungsform des anti-symmetrischen *f4*-Eigenmodes mit vier Schwingungsbäuchen dienen.

Bei einer Anregung des Nutzmodes werden im in der oben beschriebenen Weise vibrierenden, einzigen Meßrohrs 10 aufgrund von mit den Biegeschwingungen einhergehenden Massenbeschleunigungen bekanntlich Querkräfte *Q*_{*1*} erzeugt. Beispielsweise würde sich bei einer Schwingungsamplitude von ca. 0,03 mm für das oben erwähnte Edelstahl-Meßrohr eine Querkraft von etwa 100 N ergeben.

Für den Fall, daß diese Querkräfte *Q*_{*1*} nicht kompensiert werden, wird das am Einlaßrohrstück 11 und am Auslaßrohrstück 12 aufgängte Meßrohr 10 zusammen mit dem daran fixierten ersten Tragsystem 20 lateral aus der zugewiesenen statischen Ruhelage ausgelenkt.

Dementsprechend würden die Querkräfte *Q*_{*1*} via Einlaß- und Auslaßrohrstück 11, 12 zumindest teilweise auch auf die angeschlossene Rohrleitung wirken und diese somit gleichfalls vibrieren lassen.

Zur Minimierung solcher, auf die Rohrleitung wirkenden, oszillierenden Querkräfte *Q*_{*1*} ist das erste Tragsystem 20 nach einer bevorzugten Ausgestaltung der Erfindung als ein zum Meßrohr 10 außerphasig, insb. gegenphasig, vibrierender Gegenschwingers 200 realisiert.

Der Gegenschwinger 200 dient dazu, den Meßwandler für genau einen vorherbestimmten, z.B. einen im Betrieb des Meßwandlers am häufigsten erwarteten oder auch kritischen Fluiddichtewert soweit dynamisch auszubalancieren, daß die im vibrierenden Meßrohr 10 erzeugten Querkräfte *Q*_{*1*} vollständig kompensiert werden und letzteres seine statische Ruhelage praktisch nicht verläßt. Dementsprechend wird der Gegenschwinger 200 im Betrieb des Meßwandlers ebenfalls zu Biegeschwingungen angeregt, die im wesentlichen koplanar zu den Biegeschwingungen des Meßrohrs 10 ausgebildet sind. Der Gegenschwinger 200 ist dazu, wie in der Fig. 2 dargestellt, bevorzugt rohrförmig, insb. koaxial zum Meßrohr 10 ausgerichtet, ausgeführt. Falls erforderlich, kann der Gegenschwinger 200 auch, wie z.B. auch in der US-A 59 69 265 gezeigt, mehrteilig zusammengesetzt oder mittels zweier separater, einlaß- bzw. auslaßseitig am Meßrohr 10 fixierter Teilschwinger realisiert sein.

Um ein möglichst einfach handhabbares Abstimmen des Gegenschwingers 200 auf den erwähnten Fluiddichtewert und die dann tatsächlich angeregte Schwingungsform des Meßrohrs 10 zu ermöglichen, sind nach einer bevorzugten Ausgestaltung der Erfindung dem Gegenschwinger 200 diskrete erste und zweite Massenstücke 201, 202, insb. lösbar, aufgesetzt. Die Massenstücke 201, 202 können z.B. auf entsprechende, von außen am Meßrohr fixierte Stehbolzen aufgeschraubte Scheiben oder auf das Meßrohr 10 aufgeschobene kurze Rohrstücke sein. Ferner kann eine entsprechende Massenverteilung über dem Gegenschwinger 200 z.B. auch durch Ausformen von Längs- oder Ringnuten realisiert werden. Eine für die jeweilige Anwendung geeignete Masseverteilung kann in der dem Fachmann bekannten Weise vorab z.B. mittels Finite-Elemente-Berechnungen und/oder mittels entsprechender Kalibriermessungen ohne weiteres ermittelt werden. Fall.s erforderlich, können selbstverständlich auch mehr als die genannten zwei Massenstücke 201, 202 verwendet werden.

Zum Erzeugen mechanischer Schwingungen des Meßrohrs 10 umfaßt der Meßwandler ferner eine, insb. elektrodynamische, Erregeranordnung 40. Diese dient dazu, eine von einer, hier nicht dargestellten, Steuer-Elektronik eingespeiste, elektrische Erregerenergie *E*_{*exc*}, z.B. mit einem geregelten Strom und/oder einer geregelten Spannung, in eine auf das Meßrohr 10, z.B. pulsförmig oder harmonisch, einwirkende und dieses in der vorbeschriebenen Weise elastisch verformende Erregerkraft *F*_{*exc*} umzuwandeln. Die Erregerkraft *F*_{*exc*} kann hierbei, wie in Fig. 1 schematisch dargestellt, bidirektional oder aber auch unidirektional ausgebildet sein und in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung kann z.B. eine einfache Tauchspulenanordnung mit einer am Gegenschwinger 200 befestigten zylindrischen Erregerspule, die im Betrieb von einem entsprechenden Erregerstrom durchflossen ist, und mit einem in die Erregerspule zumindest teilweise eintauchenden dauermagnetischen Anker, der von außen, insb. mittig, am Meßrohr 10 fixiert ist, dienen. Ferner kann die Erregeranordnung 40 z.B. auch als ein Elektromagnet oder, wie z.B. in der WO-A 99 51 946 gezeigt, als ein seismischer Erreger realisiert sein.

Zum Detektieren von Schwingungen des Meßrohr 10 kann z.B. eine für derartige Meßwandler übliche Sensoranordnung verwendet werden, bei der in der dem Fachmann bekannten Weise mittels eines einlaßßseitigen ersten Sensors 50A und mittels eines auslaßseitigen zweiten Sensors 50B die Bewegungen des Meßrohrs 10 erfaßt und in ein entsprechendes erstes bzw. zweites Sensorsignal S₁, S₂ umgewandelt werden. Als Sensoren 50A, 50B können z.B., wie in Fig. 2 schematisch dargestellt, die Schwingungen relativ messende, elektrodynamische Geschwindigkeitssensoren oder aber elektrodynamische Wegsensoren oder Beschleunigungssensoren verwendet werden. Anstelle elektrodynamischer Sensoranordnungen können ferner auch mittels resistiver oder piezo-elektrischer Dehnungsmeßstreifen messende oder opto-elektronische Sensoranordnungen zum Detektieren der Schwingungen des Meßrohrs 10 dienen.

Wie bereits mehrfach erwähnt, kann das Meßrohr 10 auch mittels des Gegenschwingers 200, praktisch nur für einen einzigen Fluiddichtewert, bestenfalls aber für einen sehr schmalen Fluiddichtebereich dynamisch ausbalanciert werden.

Zur verbesserten dynamischen Ausbalancierung des Meßwandlers, insb. auch bei Fluiden mit signifikant schwankender Dichte ρ, umfaßt dieser ferner einen am Einlaßrohrstück 11 starr fixierten ersten Ausleger 15 und einen am Auslaßrohrstück 12 starr fixierten, insb. zum Ausleger 15 identisch geformten, zweiten Ausleger 16.

Die beiden, insb. symmetrisch zur Mitte des Meßrohrs 10 angeordneten, Ausleger 15, 16 dienen erfindungsgemäß dazu, im Einlaßrohrstück 11 bzw. im Auslaßrohrstück 12 dynamisch Biegemomente zu erzeugen, wenn das in der beschriebenen Weise vibrierende Meßrohr 10 ggf. zusammen mit dem Gegenschwinger 200 aus seiner statischen Ruhelage, in Fig. 3 symbolisiert durch die Längsachse L, lateral ausgelenkt wird. Dazu sind der Ausleger 15 an einem dem Meßrohr 10 zugewandten Auslaßende 11' des Einlaßrohrstücks 11 und der Ausleger 16 an einem dem Meßrohr 10 zugewandten Einlaßende 12' des Auslaßrohrstücks 12 form- und/oder kraftschlüssig verbunden, z.B. angeschweißt oder aufgeklemmt.

Die beiden Ausleger 15, 16 sind, wie in den Fig. 1 und 2 schematisch dargestellt, so, bevorzugt möglichst nah zum Meßrohr 10 hin, im Meßwandler angeordnet, daß ein Masseschwerpunkt des Auslegers 15 bzw. ein Masseschwerpunkt des Auslegers 16 vom Meßrohr 10, insb. in dessen Flucht liegend, beabstandet ist. Auf diese Weise werden mittels der Ausleger 15, 16 exzentrisch, also nicht im zugehörigen Massenschwerpunkt, an der jeweiligen Fixierstelle, nämlich dem Auslaßende 11' bzw. dem Einlaßende 12', angreifende Massenträgheitsmomente geschaffen. Diese wiederum erzwingen, aufgrund lateraler Bewegungen *V* des Meßrohrs 10 um den jeweiligen, nahezu ruhenden Massenschwerpunkt pendelnd, eine zusätzliche Verdrehung von Einlaß- bzw. Auslaßende 12', 11' um eine zu dieser lateralen Bewegung *V* sowie zur Längsachse L senkrechten imaginären ersten bzw. um eine zur ersten im wesentlichen parallelen zweiten Drehachse D₁, D₂, vgl. Fig. 3.

Diese, in Fig. 4 nochmals vergrößert dargestellte, Verdrehung seines Auslaßendes 11' wiederum bewirkt zumindest abschnittsweise eine zusätzliche, zur Verformung des Meßrohrs 10 gegenläufige Verbiegung des Einlaßrohrstücks 11; in analoger Weise wird das Auslaßrohrstück 12 ebenfalls gegenläufig zum Meßrohr 10 verbogen. Diese Verbiegungen von Ein- bzw. Auslaßrohrstück 11, 12 können nach den Erkenntnissen der Erfinder nunmehr, z.B. mittels computergestützter Simulationsberechnungen oder mittels experimenteller Messungen, dahingehend optimiert werden, daß durch die Verbiegung erzeugte Gegenkräfte *Q*_{*2*} die oben erwähnten Querkräfte *Q*_{*1*} im vibrierenden Meßrohr 10 vollständig oder zumindest teilweise kompensiert werden. Allfällige Verformungen der angeschlossenen Rohrleitung aufgrund der so erzeugten Biegemomente können ohne weiteres z.B. durch eine entsprechend hohe Biegesteifigkeit des oben erwähnten Wandlergehäuses 300 unterdrückt werden.

Nach einer bevorzugten Ausgestaltung der Erfindung ist der Ausleger 15 so geformt und am Meßrohr 10 angebracht, daß dessen Massenschwerpunkt im wesentlichen in einem Bereich einer halben Länge des Einlaßrohrstücks 11 liegt und ist der Ausleger 16 so geformt und am Meßrohr 10 angebracht, das dessen Massenschwerpunkt im wesentlichen in einem Bereich einer halben Länge des Auslaßrohrstücks 12 liegt.

Zum Erzeugen der Trägheitsmomente umfaßt der Ausleger 15, wie in Fig. 2 dargestellt, einen entsprechenden Auslegerarm 15A an den, vom Auslaßende 11' entfernt, eine Auslegermasse 15B angeformt ist; dementsprechend weist der Ausleger 16 einen Auslegerarm 16A mit einer vom Einlaßende 12' entfernt angeformten eine Auslegermasse 16B auf. Die Auslegermassen 15B, 16B sind so bemessen, daß sie auch bei einer lateralen Auslenkung des Meßrohrs 10 und somit auch des Aus- bzw. Einlaßendes 11', 12' sich zwar ggf. verdrehen können, translatorisch jedoch im wesentlichen in jener statischen Ruhelage verharren, die ihnen jeweils aufgrund der konkreten mechanisch-geometrischen Eigenschaften der Ausleger 15, 16 zugewiesenen sind. Die Auslegermassen 15B, 16B sind daher, insb. im Vergleich zum Meßrohr 10, möglichst träge auszulegen. Experimentelle Untersuchungen an Meßwandlern mit oben erwähntem Edelstahl-Meßrohr haben z.B. ergeben, daß jede der Auslegermasse 15B, 16B vorteilhafterweise in etwa fünfmal so groß wie eine Masse des Meßrohrs 10 auszulegen ist.

Um ein möglichst widerstandsloses Verdrehen der Auslegermassen zuzulassen sind die Ausleger 15 bzw. 16 ferner bevorzugt so geformt und am Meßrohr 10 fixiert, daß ein Quotient von vorgenanntem Massenträgheitsmoment durch die jeweils zugehörige Auslegermasse 15B bzw. 16B möglichst niedrig ist. Untersuchungen hierzu haben ferner ergeben, daß, z.B. für den Fall, daß das Meßrohr 10 wie oben beschrieben als Edelstahl-Meßrohr ausgeführt ist, die Ausleger 15 bzw. 16 so geformt und am Ein- bzw. am Auslaßrohrstück 11, 12 zu fixieren sind, daß vorgenannter Quotient möglichst kleiner als 10⁻⁴ kg · m² / kg ist. Der Quotient kann z.B. in vorteilhafter Weise dadurch sehr genau eingestellt werden, daß die Auslegermasse 15B bzw. 16B inform gestreckter, in den Fig. 3 und 4 durch ihre jeweiligen Querschnitte symbolisierten, Prismen oder Zylinder ausgeführt und via Auslegerarm 15A bzw. 16A so am Ein- bzw. am Auslaßrohrstück 11, 12 fixiert ist, daß eine jeweilige imaginäre Hauptträgheitsachse für ein zugehöriges minimales Hauptträgheitsmoment der Auslegermasse 15B bzw. 16B parallel zu vorgenannten Drehachsen D₁, D₂ ausgerichtet ist.

Des weiteren kann vorgenannter Quotient auch dynamisch in Abhängigkeit von den Bewegungen *V* des Meßrohrs 10, minimiert werden. Dazu sind die Auslegermassen 15B, 16B nach einer bevorzugten Ausgestaltung der Erfindung zumindest partiell biegeweich, z.B., wie auch in Fig. 1 schematisch dargestellt, mittels eingeformter, im wesentlichen parallel zu den Drehachsen D₁, D₂ ausgerichteter Nuten, ausgeführt.

Die Ausleger 15, 16 sind ferner bevorzugt so ausgestaltet, daß deren Auslegerarme 15A bzw. 16A eine, bevorzugt mindestens dreimal, höhere Biegesteifigkeit als das Ein- bzw. das Auslaßrohrstück 11, 12 aufweisen. Dazu können die Auslegerarme 15A, 16A z.B., wie bereits auch für den Gegenschwinger 200 beschrieben, rohrförmig ausgeführt sein; des weiteren können sie dann, ggf. mit dem Gegenschwinger 200 fluchtend, ebenfalls koaxial zum Meßrohr 10 ausgerichtet am Ein- bzw. Auslaßrohrstück 11, 12 fixiert sein. Für letzteren Fall können die Auslegerarme 15A, 16A zusammen mit dem Gegenschwinger 200 z.B. auch mittels eines einzigen rohrförmigen Halbzeugs einstückig oder mittels zweier Rohrhälften zweistückig gefertigt werden. Ferner kann vorbeschriebenes Verhältnis der Biegesteifigkeiten z.B. durch ein entsprechend lang ausgeführtes Ein- bzw. Auslaßrohrstück 11, 12 eingestellt werden.

Es hat sich hierbei jedoch überraschenderweise gezeigt, das die Biegemomente für Einlaßrohrstück 11 bzw. Auslaßrohrstück 12 auch mit sich in gewissen Grenzen signifikant elastisch verformenden Auslegerarmen 15A, 16A ausreichend genau erzeugt werden können. Die Auslegermassen 15B, 16B können dann z.B. auch so ausgelegt sein, daß sie, in ihrer zugewiesenen, bevorzugt relativ weit vom Meßrohr 10 entfernten Ruhelage verharrend, praktisch auch keine Verdrehung erfahren. Für den oben erwähnten Fall, daß die Auslegerarme 15A, 16A rohrförmig ausgeführt sind, können diese sowohl zum Einstellen ihrer Biegesteifigkeit als auch zum Einstellen des oben genannten Quotient z.B. längsseits ebenfalls angeschlitzt werden.

Wie sich aus den vorangegangenen Erläuterungen unschwer erkennen läßt, zeichnet sich der erfindungsgemäße Meßwandler durch eine Vielzahl von Einstellmöglichkeiten aus, die es dem Fachmann, insb. auch noch nach einer Spezifikation von äußeren oder inneren Einbaumaßen, ermöglichen, eine Kompensation von im Meßwandler betriebsbedingt erzeugten Querkräften mit einer hohen Güte zu erzielen.

## Patentansprüche

1. Meßwandler vom Vibrationstyp für ein in einer Rohrleitung strömendes Fluid, welcher Meßwandler umfaßt:
- ein im Betrieb vibrierendes Meßrohr (10) zum Führen des Fluids,
-- wobei das Meßrohr (10) über ein einlaßseitig einmündendes Einlaßrohrstück (11) und über ein auslaßseitig einmündendes Auslaßrohrstück (12) mit der Rohrleitung kommuniziert und
-- wobei aufgrund von im vibrierenden Meßrohr (10) erzeugten Querkräften dieses zumindest zeitweise aus einer zugewiesenen statischen Ruhelage lateral verschoben ist,
- eine Erregeranordnung (40) zum Antreiben des Meßrohrs (10),
- eine Sensoranordnung (50) zum Erfassen einlaßseitiger und auslaßseitiger Schwingungen des Meßrohrs (10),
- einen am Einlaßrohrstück (11) starr fixierten ersten Ausleger (15) zum Erzeugen von dieses elastisch verformenden Biegemomenten und
- einen am Auslaßrohrstück (12) starr fixierten zweiten Ausleger (16) zum Erzeugen von dieses elastisch verformenden Biegemomenten,
- wobei im sich verformenden Einlaßrohrstück (11) und im sich verformenden Auslaßrohrstück (12) Gegenkräfte erzeugt werden, die die im vibrierenden Meßrohr (10) erzeugten Querkräfte zumindest teilweise kompensieren.

2. Meßwandler nach Anspruch 1, bei dem das sich verformende Einlaßrohrstück (11) und das sich verformende Auslaßrohrstück (12) im wesentlichen gegenphasig zum Meßrohr (10) schwingen.

3. Meßwandler nach Anspruch 1 oder 2, bei dem das Meßrohr (10) im wesentlichen gerade ist.

4. Meßwandler nach einem der Ansprüche 1 bis 3, bei dem das vibrierende Meßrohr (10) Biegeschwingungen ausführt.

5. Meßwandler nach einem der Ansprüche 1 bis 4, der einen einlaßseitig und auslaßseitig am Meßrohr (10) fixierten Gegenschwinger (200) umfaßt.

6. Meßwandler nach Anspruch 5, bei dem der Gegenschwinger (200) rohrförmig ist.

7. Meßwandler nach Anspruch 3 und 6, bei dem das Meßrohr zumindest teilweise vom Gegenschwinger (200) ummantelt ist.

8. Meßwandler nach Anspruch 7, bei dem das Meßrohr (10) und der Gegenschwinger (200) zueinander koaxial ausgerichtet sind.

9. Meßwandler nach einem der Ansprüche 5 bis 8, bei dem in den Gegenschwinger (200) Nuten eingeformt sind.

10. Meßwandler nach einem der Ansprüche 5 bis 9, bei dem am Gegenschwinger (200) diskrete, erste und zweite Massenstücke (201, 202) fixiert sind.

11. Meßwandler nach Anspruch 9 oder 10, bei dem die Massenstücke (201, 202) ringförmig am Gegenschwinger (200) und koaxial zu diesem angeordnet sind.
